# EUROPEAN PATENT SPECIFICATION

(11) **EP 0 358 761 B1**
(45) Date of publication and mention of the grant of the patent: **15.12.1993**
(21) Application number: 88904269.3
(22) Date of filing: 13.05.1988
(51) Int. Cl.: G01N 27/30

(54) **ELECTRODE**
ELEKTRODE
ELECTRODE

(30) Priority: 14.05.1987 JP 115741/87
(43) Date of publication of application: 21.03.1990
(73) Proprietor: TERUMO KABUSHIKI KAISHA, Tokyo 151 (JP)
(72) Inventor: OYAMA, Noboru, Fuchu-shi Tokyo (JP)
(74) Representative: Gillard, Marie-Louise
(86) International application number: JP8800462
(87) International publication number: WO8808974

(56) References cited:
- EP-A- 0 056 283
- JP-A- 5 832 155
- JP-A- 6 221 054
- JP-A-60 128 342

## Description

### Technical Field

The present invention relates to an electrode and, more particularly, to an electrode for sensing anions in a solution.

### Background Art

A conventional electrode utilizes silicone rubber, polythene or a graphite material which permeates a desired anion seed as a heterogeneous solid layer or utilizes AgX (X: halogen atom) or Ag₂S as a homogeneous press solid layer. A sensing portion of such an electrode, however, is as thick as 2 to 3 cm and therefore is not suited for measuring samples of trace amounts.

The present applicants have proposed a calcium sensor of a so-called chlorine ion carrier layer type obtained by mixing triphenyl tine chloride in PVC or a calcium sensor using calcium bis [di-(n-octylphenyl)phosphate], and a potassium sensor obtained by dissolving valinomycine in PVC. These electrodes, however, use a selective layer in which an ion active substance is sealed, and ions in the layer undesirably elute with time.

An electrode potential of a conventional reference electrode electrochemically does not change much in a system in which an ion concentration, especially a hydrogen ion concentration in a solution to be measured changes and a measurement temperature changes. Typical examples of such a reference electrode which are widely used are a sodium calomel electrode and a silver/silver chloride electrode. In these reference electrodes, a solution communicating portion with respect to a solution to be measured is opened so that ions in the solution to be measured and those in an electrode internal solution chamber mutually flow therebetween. Therefore, the ions in the internal solution chamber constantly flow out or are adversely affected by chlorine ions, and do not allow the electrodes to be used in fields and applications in which these phenomena are considered problematic. The phenomena often pose problems especially in a medical field.

### Disclosure of Invention

The present invention provides an electrode which eliminates the above conventional drawbacks and can stably measure a desired type of anions without eluation of ions to a solution to be measured. The present invention also provides a reference electrode which is rarely adversely affected by ions or a dissolved gas with a simple arrangement.

In addition, the present invention provides an electrode which can measure an anion concentration without being adversely affected by a dissolved gas such as dissolved oxygen.

The present invention is based on the finding that a layer having a cationic property exhibits an electrode response proportional to an anion concentration in a solution.

An electrode of the present invention comprises an electrically conductive substrate, and a resin layer, having an imide group on its main chain, for covering the electrically conductive substrate.

In addition, an electrode of the present invention comprises an electrically conductive substrate, a redox layer for covering the electrically conductive substrate, and a resin layer, having an imide group on its main chain, for covering the redox function layer.

The electrically conductive layer is preferably made of a carbon material or gold. The thickness of the resin layer having an imide group on its main chain is 0.01 µm to 500 µm.

According to the present invention, there is provided an electrode which can stably measure a desired type of anions without eluation of ions to a solution to be measured. In addition, according to the present invention, there is provided a reference electrode which is rarely adversely affected by ions or a dissolved gas with a simple arrangement.

Furthermore, according to the present invention, there is provided an electrode which can measure an anion concentration without being adversely affected by a dissolved gas such as dissolved oxygen.

### Brief Description of Drawings

Fig. 1 is a schematic view showing an electrode according to Examples 1 to 3 of the present invention;
Fig. 2 is a graph showing a change over time of the electrode of Example 1;
Fig. 3 is a graph showing a pH change of the electrode of Example 1;
Fig. 4 is a graph showing an influence of an Na⁺ ion concentration on the electrode of Example 1;
Fig. 5 is a graph showing an influence of a dissolved gas on the electrode of Example 1;
Fig. 6 is a graph showing an influence of a Cl⁻ ion concentration on the electrode of Example 3;
Fig. 7 is a schematic view showing an electrode according to Example 4;
Figs. 8A and 8B are graphs showing an influence of a dissolved gas on the electrodes of Examples 3 and 4, respectively;
Fig. 9 is a graph showing an influence of a Cl⁻ ion concentration on the electrode of Example 4;
Fig. 10 is a graph showing changes over time of the electrodes of Examples 3 and 4;
Fig. 11 is a graph showing an influence of a ClO₄-ion concentration on the electrode of Example 3; and
Fig. 12 is a graph showing an influence of a CaCl₂ concentration on the electrode of Example 3.

### Best Mode of Carrying Out the Invention

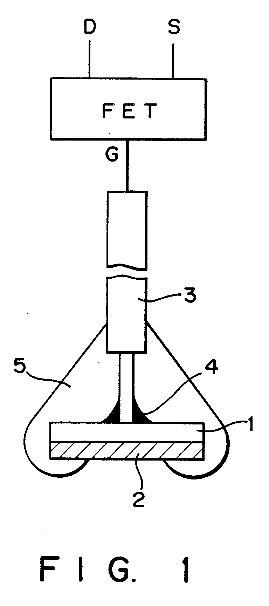

Fig. 1 is a schematic view showing an electrode according to an example of the present invention. Note that in Fig. 1, the distal end of the electrode is illustrated in an enlarged scale for clearly showing its structure.

### 〈Example 1〉

The surface of a columnar basal plain pyrolytic graphite (BPG) 1 having a sectional area of 0.196 cm² (diameter = 0.5 cm) was polished and smoothened by a sand paper (#2,000), and the smoothened surface was washed with acetone to remove shavings. One surface of the BPG 1 was adhered on a glass plate by a silicone adhesive to fix the BPG 1. A solution mixture (polyimide resin : 2-methoxyethanol = 1 : 2 (v/v)) obtained by dissolving PHOTONIES (tradename: manufactured by TORAY INDUSTRIES INC.) as a polyimide resin (insulating material) in 2-methoxyethanol was coated on the surface of the BPG 1, and the thickness of the coated layer was controlled to be 0.01 to 500 µm by a spin coater rotated at about 4,000 rpm. The layer thickness is preferably 0.01 to 500 µm in order to obtain a pH response precision within the range of ±2 mv/pH and, more preferably, 2 µm to 100 µm in order to obtain a precision within the range of ±0.5 mV/pH.

After prebaking was performed (at 80°C for one hour), exposure (20 seconds or more) and curing (at 130°C for 30 minutes → at 300°C for 30 minutes → at 400°C for 30 minutes while a small amount of N₂ gas was supplied) were performed, thereby forming a polyimide resin layer 2. In this case, curing was performed in a diffusion reaction tube.

A lead wire 3 was brought into contact with the BPG through a silver paste 4 and fixed by an epoxy resin 5 so that the entire surface except for the polyimide resin layer 2 was insulated, thereby fabricating an electrode 10.

### 〈Experiment 1〉

The other end of the lead wire 3 of the electrode 10 fabricated following the same procedures as in Example 1 was connected to an FET gate portion, and an electromotive force between the electrode 10 and a saturated sodium chloride calomel electrode was measured. A standard buffer solution (boric acid, phosphoric acid or citric acid standard solution) was used as a solution to be measured, and the measurement was performed throughout a wide pH range from 2 to 8.0.

As a result, an EMF change obtained when a pH concentration was changed from the acidic side to the alkaline side fell within the range of 1 mV. When the pH concentration was changed from the alkaline to acidic side, the EMF largely changed from about 10 to 20 mV/pH for a week. That is, it was found that a time period of about a week was necessary to stabilize the EMF change by the pH change.

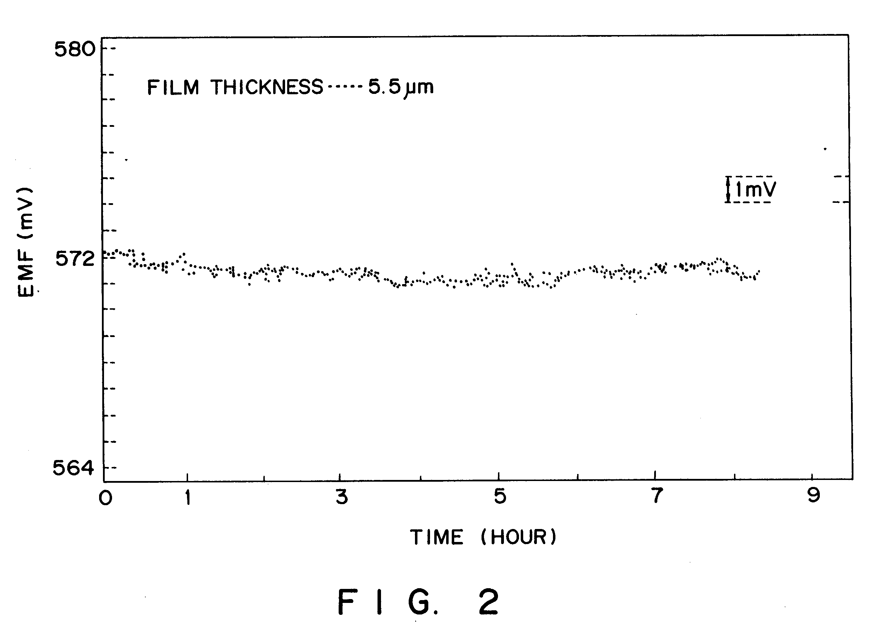

A change over time of an electrode having a stable EMF was checked. As a result, as shown in Fig. 2, an equilibrium potential stably fell within the range of ±0.5 mV even after ten hours had passed. That is, the electrode was found to be usable as a reference electrode in continuous monitoring.

### 〈Experiment 2〉

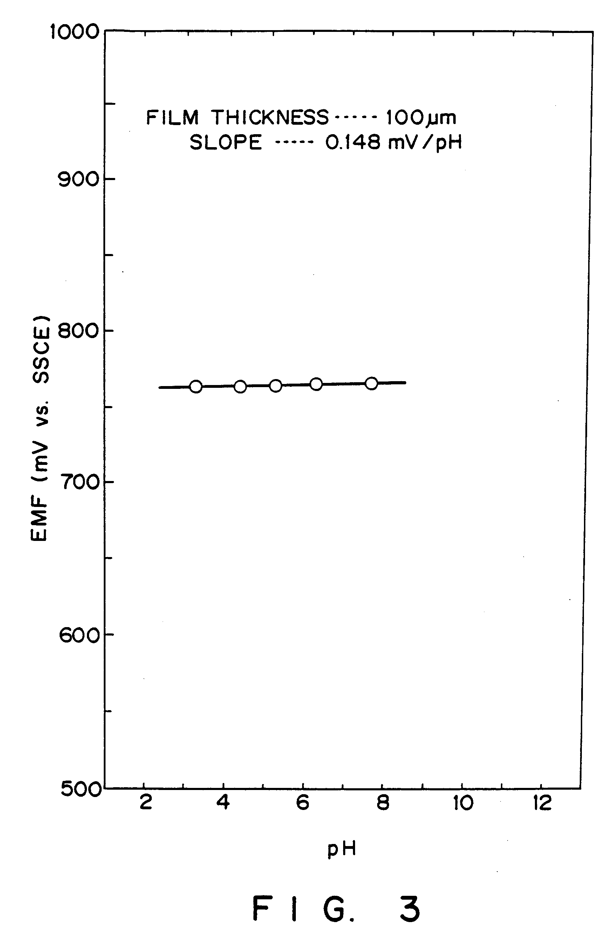

An electrode having a 100-µm thick polyimide resin layer (PHOTONIES layer) was fabricated following the same procedures as in Example 1, and an EMF was measured between the electrode and an SSCE in a pH range from 3.0 to 8.0 following the same procedures as in Experiment 1. As a result, as shown in Fig. 3, the EMF had almost no gradient (0.148 mV/pH) with respect to the pH change. That is, the electrode was found to have a stable EMF with respect to a pH change. A solution to be measured was a standard solution in which the pH was changed from 3.0 to 8.0.

### 〈Experiment 3〉

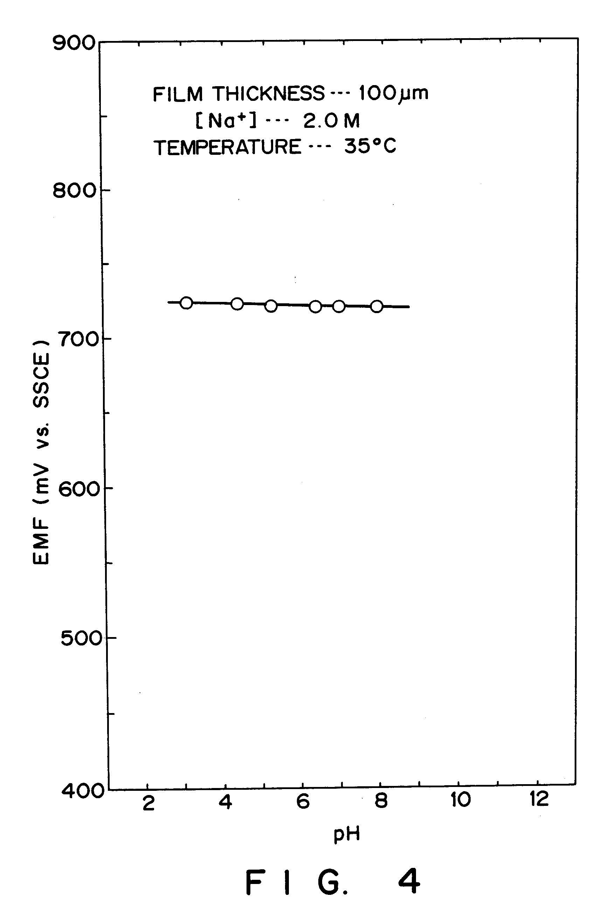

An influence of interference of Na⁺ ions was checked when a measurement was performed under the same conditions (an electrode structure and a measuring method) as in Experiment 2. As is apparent from Fig. 4, the electrode was almost not interfered with by the Na⁺ ions. The measurement was performed at a temperature of 35°C while an Na⁺ ion concentration was maintained at 2.0 M.

### 〈Experiment 4〉

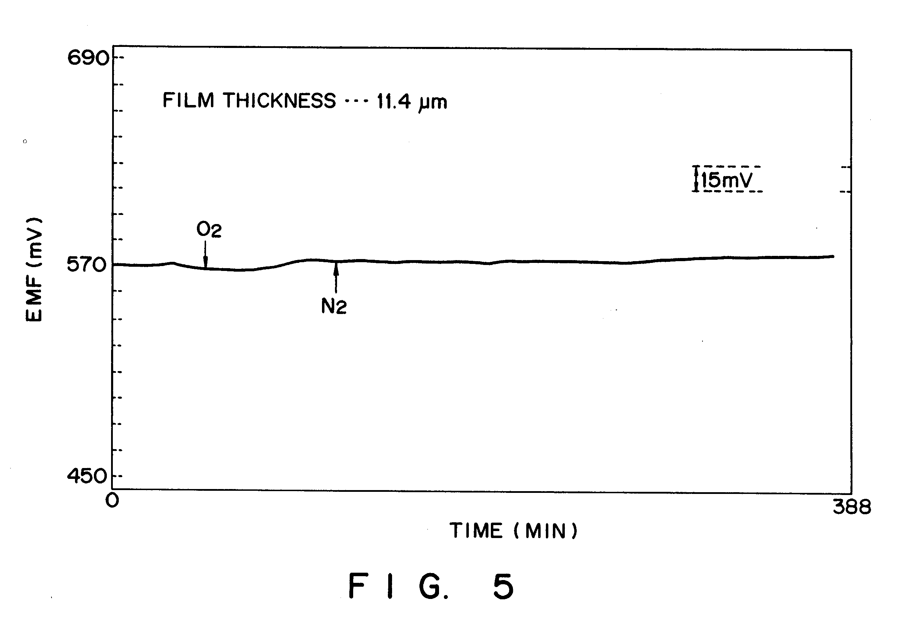

An influence of a dissolved gas (nitrogen or oxygen) was checked following the same procedures as in Experiment 1 using an electrode fabricated following the same procedures as in Experiment 1. As a result, as shown in Fig. 5, the electrode was adversely affected by neither the nitrogen nor oxygen gas.

### 〈Example 2〉

An electrode was fabricated (PHOTONIES layer thickness = 11.4 µm) following the same procedures as in Example 1 except that curing conditions were changed (N₂ gas atmosphere : 1ℓ/min, 180°C x 30 minutes → 250°C x one hour).

### 〈Experiment 5〉

An EMF between an electrode fabricated following the same procedures in Example 2 and an SSCE was measured in a pH range from 3.0 to 8.0 following the same procedures as in Experiment 2. As a result, a gradient of the EMF was 0.179 mV/pH. That is, the electrode had a stable EMF with respect to a pH change. A change over time of the electrode was also checked. As a result, a drift in equilibrium potential was as small as ±0.06 mV even after ten hours had passed.

The electrodes in the above examples were fabricated in an experiment room. An arrangement of the electrode, however, is not limited to that in the above examples. For example, a microelectrode, a plate electrode, a film-like thin-layer electrode and an electrode utilizing micropatterned printed wiring may be fabricated.

### 〈Example 3〉

Polyamic acid (photosensitive PHOTONIES UR-3140: manufactured by TORAY INDUSTRIES INC.) was diluted four times with 2-methoxyethanol. 1 µℓ of the resultant solution was dropped on a basal plain pyrolytic graphite (BPG: manufactured by Union Carbite Co.) having a sectional area of 0.19 cm² and insulated by an insulating member (Teflon: manufactured by Du Pont de Nemours, E.I., Co.), and the thickness of the formed layer was controlled to be about 5 µm.

An electrode of this example was fabricated as follows.
(I) Prebaking (in air at 80°C for one hour)
(II) Exposure (for 30 seconds by ultraviolet light)
(III) Postbaking (in nitrogen at 130°C, 300°C and then 400°C for 30 minutes each)
(IV) A fabricated sensing portion was brought into contact with a lead wire through a silver paste and bonded by an epoxy resin.
(V) The lead wire was soldered to an FET gate terminal portion.

An arrangement of the electrode fabricated as described above is schematically shown in Fig. 1. In this case, the FET was an n-channel MOS type 2SK241-0 manufactured by TOSHIBA SILICON CO., LTD.

### 〈Experiment 6〉

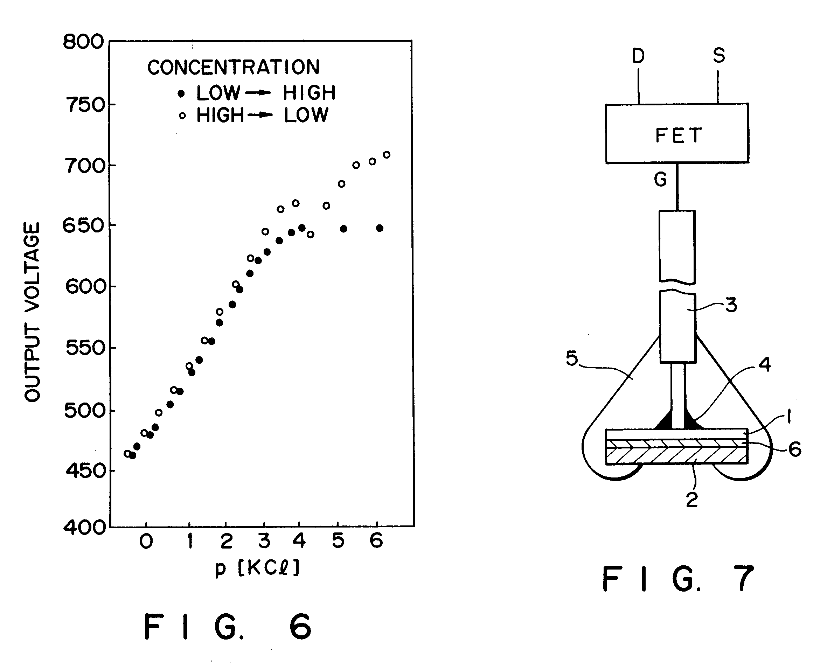

An electrode fabricated following the same procedures as in Example 3 was used as a working electrode, a saturated sodium chloride calomel electrode (SSCE) was used as a comparative electrode, and potassium chloride concentration was changed from 0.5 to 10⁻⁶ M in distilled water. As a result, the linearity of a Nernst equation was established within a concentration range from 0.5 to 10⁻⁴ M. The result is shown in Fig. 6.

As shown in Fig. 6, the linearity was established within the range of 0.5 to 10⁻⁴ M when the measurement was performed from a high concentration side to a low concentration side. When the measurement was performed from the low to high concentration side, the linearity was established within the range from 0.5 to 10^{-3.5} M. Sensitivity of 50 mV/pCl (25°C) was obtained by a gradient at this time. Within this range, equilibrium potentials at the respective concentrations coincided well with each other. That is, the electrode can be used as a potassium chloride concentration measuring sensor.

### 〈Example 4〉

A pp'-biphenol electrolytic (PBP) layer 6 was coated on the BPG of Example 3.

### (Electrolytic Polymerization Conditions)

40 mM pp'-biphenol
0.2 M NaClO₄
Solvent CH₃CN solution
Electrolysis was performed at a constant potential of 51.4 V (vs. SSCE) for ten minutes.

A polyimide layer was coated on the electrolytic layer following the same procedures as in Example 3.

An arrangement of the electrode fabricated as described above is schematically shown in Fig. 7.

### 〈Experiment 7〉

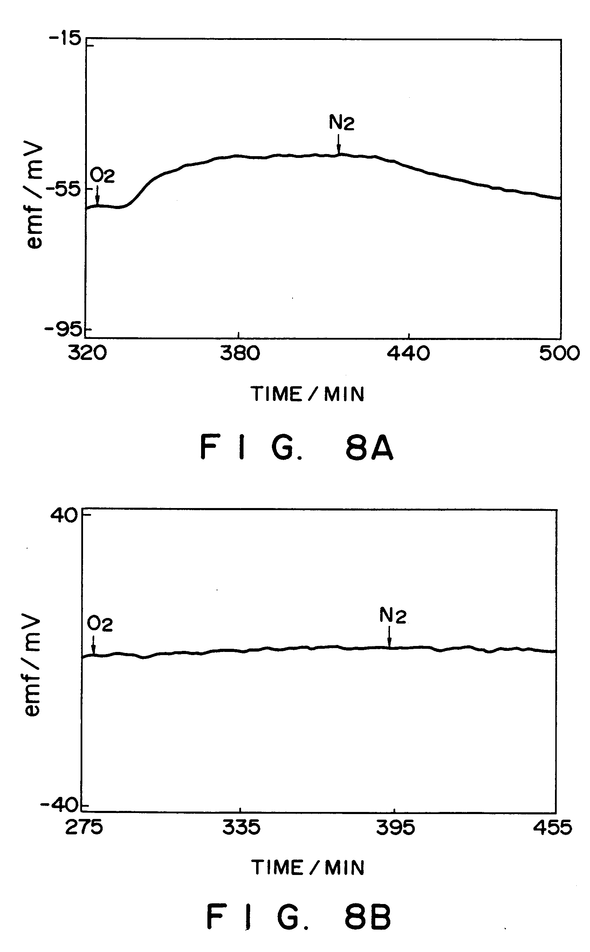

Using an electrode fabricated following the same procedures as in Example 4, an output potential was measured in a system (PO₂ = 154.6 mmHg (25°C)) in which dissolved oxygen was saturated). Then, deoxygenation was performed to check an output potential change due to a PO₂ partial pressure change. As a result, as shown in Fig. 8B, almost no change was found. For a comparison, an output potential change was measured using an electrode fabricated following the same procedures as in Example 3. As a result, as shown in Fig. 8A, the output potential was adversely affected by a PO₂ partial pressure.

As described above, an influence of dissolved oxygen can be prevented by forming the PBP layer between the BPG and the polyimide layer. In this case, the thickness of the PBP layer was 2 µm, and that of the polyimide layer was 5 µm.

### 〈Experiment 8〉

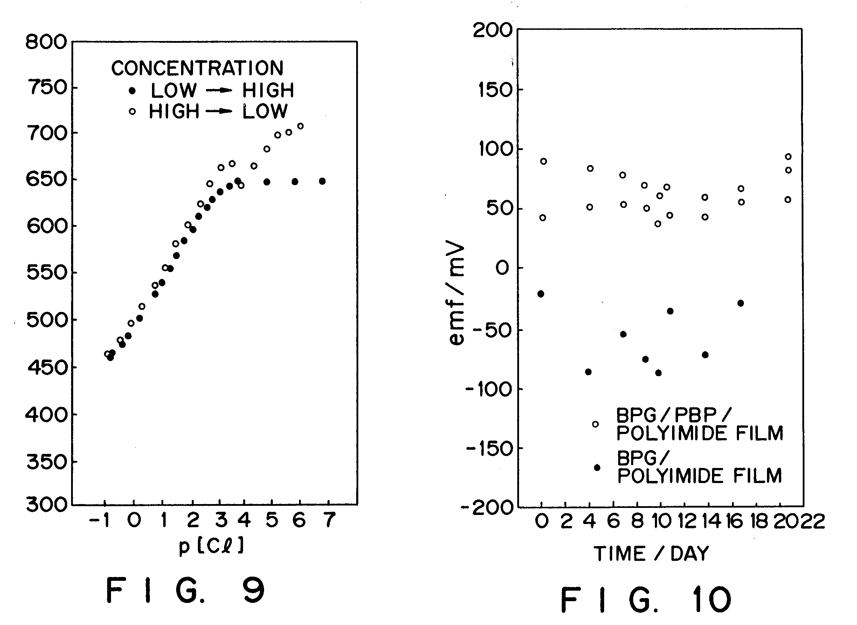

Using an electrode fabricated following the same procedures as in Example 4, a Cl⁻ concentration of KCl and an output potential obtained at the concentration were measured following the same procedures as in Experiment 6. The measurement result is shown in Fig. 9.

As shown in Fig. 9, the linearity was substantially established to a pCl⁻ concentration of about 3.5 when the Cl⁻ concentration was changed from a low side to a high side and vice versa. As a result, 50 mV/pCl (decade: 25°C) was obtained in accordance with a gradient.

### 〈Experiment 9〉

An electrode in which a 2-µm thick PBP layer was formed between a BPG and a polyimide layer was fabricated following the same procedures as in Example 4, and the stability of a potential response of the electrode in a buffer solution (pH = 7.0) was checked. The result is shown in Fig. 10.

As is apparent from Fig. 10, the potential response was stable for about 20 days although a drift more or less exists. When an electrode in which a polyimide layer was coated on a BPG was used, a measurement could not be performed because drifts occured.

### 〈Experiments 10 & 11〉

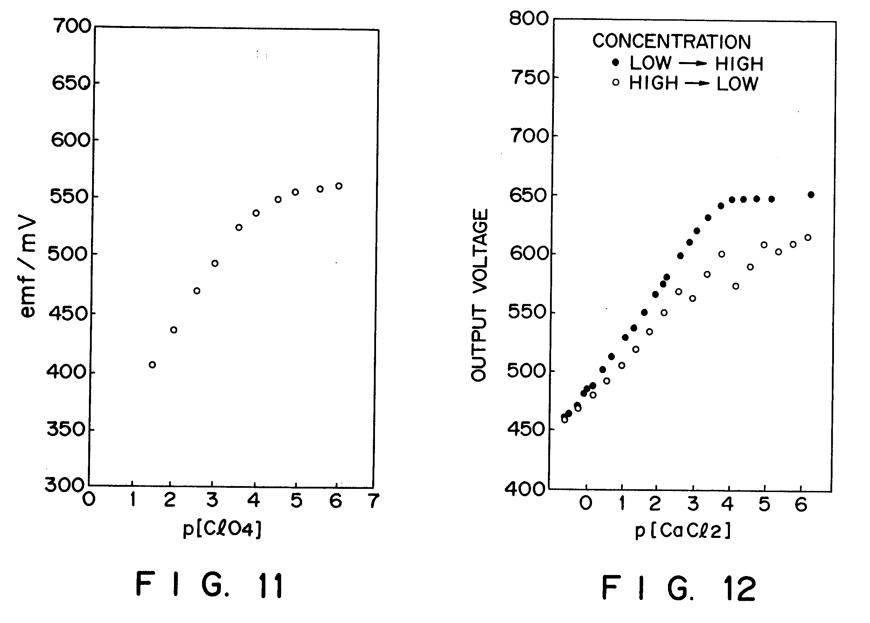

Using an electrode fabricated following the same procedures as in Example 3, an output response (mV) was measured when a concentration of ClO₄- of NaClO₄ or CaCl₂ was changed. The results are shown in Figs. 11 and 12.

As a result, sensitivities of 59.38 mV/pClO₄- and 43.75 mV/pCaCl₂ (25°C) were obtained. A linearity range, however, was 10⁻⁴ M or less at each concentration.

As has been described above, the electrode in which a polyimide layer having a skeleton with a cationic property in a polymer is coated on a carbon material can be widely used in measuring an anion seed (KCl, NaClO₄, CaCl₂ ...). In addition, this electrode can be used as a reference electrode in a solution in which an anion concentration is constant.

## Claims

1. An electrode comprising:
an electrically conductive substrate; and
a resin layer, having an imide group on a main chain thereof, for covering said electrically conductive substrate.

2. An electrode comprising:
an electrically conductive substrate;
a redox function layer for covering said electrically conductive layer; and
a resin layer, having an imide group on a main chain thereof, for covering said redox layer.

3. The electrode according to claim 1 or 2, wherein said electrically conductive substrate consists of a carbon material or gold.

4. The electrode according to any one of claim 1 to 3, wherein a thickness of said resin layer having the imide group on the main chain thereof is 0.01 µm to 500 µm.

## Patentansprüche

1. Elektrode mit
einem elektrisch leitfähigen Substrat, und
einer Harzschicht, die eine Imidgruppe auf einer Hauptkette davon enthält, zum Bedecken des elektrisch leitfähigen Substrats.

2. Elektrode mit
einem elektrisch leitfähigen Substrat,
einer Reduktions/Oxidationsfunktionsschicht zum Bedecken der elektrisch leitfähigen Schicht, und
einer Harzschicht, die eine Imidgruppe auf einer Hauptkette davon enthält, zum Bedecken der Reduktions/Oxidationsschicht.

3. Elektrode nach Anspruch 1 oder 2, bei der das elektrisch leitfähige Substrat aus Kohlenstoffmaterial oder Gold besteht.

4. Elektrode nach irgendeinem der Ansprüche 1 bis 3, bei der eine Dicke der Harzschicht, die die Imidgruppe auf der Hauptkette davon besitzt, 0,01 µm bis 500 µm beträgt.

## Revendications

1. Electrode comprenant :
un substrat conducteur de l'électricité ; et
une couche de résine ayant un groupe imide sur sa chaîne principale, pour recouvrir ledit substrat conducteur de l'électricité.

2. Electrode comprenant :
un substrat conducteur de l'électricité;
une couche à fonction rédox pour recouvrir ladite couche conductrice de l'électricité ; et
une couche de résine ayant un groupe imide sur sa chaîne principale, pour recouvrir ladite couche rédox.

3. Electrode selon la revendication 1 ou 2, dans laquelle ledit substrat conducteur de l'électricité consiste en un matériau carboné ou en or.

4. Electrode selon l'une quelconque des revendications 1 à 3, dans laquelle l'épaisseur de ladite couche de résine ayant le groupe imide sur sa chaîne principale est de 0,01 à 500 µm.
